(19) **Europäisches Patentamt / European Patent Office / Office européen des brevets**

(11) **EP 2 114 019 B1**

(12) # FASCICULE DE BREVET EUROPEEN

(45) Date de publication et mention
de la délivrance du brevet:
**28.03.2012 Bulletin 2012/13**

(51) Int Cl.:
**G06K 19/07** *(2006.01)* **H04B 5/00** *(2006.01)*
**H04B 7/00** *(2006.01)* **H04B 5/02** *(2006.01)*

(21) Numéro de dépôt: **09159057.0**

(22) Date de dépôt: **29.04.2009**

(54) **Recharge d'un transpondeur actif**

**Wiederaufladung eines aktiven Transponders**

**Recharge of an active transponder**

(84) Etats contractants désignés:
**AT BE BG CH CY CZ DE DK EE ES FI FR GB GR
HR HU IE IS IT LI LT LU LV MC MK MT NL NO PL
PT RO SE SI SK TR**

(30) Priorité: **30.04.2008 FR 0852918**

(43) Date de publication de la demande:
**04.11.2009 Bulletin 2009/45**

(73) Titulaire: **STMicroelectronics (Rousset) SAS
13790 Rousset (FR)**

(72) Inventeur: **Wuidart, Luc
83910, POURRIERES (FR)**

(74) Mandataire: **de Beaumont, Michel
Cabinet Beaumont
1, rue Champollion
38000 Grenoble (FR)**

(56) Documents cités:
**EP-A- 1 154 367      WO-A-03/069538
US-A1- 2003 017 804      US-A1- 2003 102 303**

**Description**

Domaine de l'invention

La présente invention concerne de façon générale des systèmes utilisant des transpondeurs, c'est-à-dire des émetteurs-récepteurs (généralement mobiles) susceptibles de communiquer sans contact et sans fil avec un terminal.
L'invention concerne plus particulièrement les systèmes utilisant des transpondeurs actifs pourvus d'une batterie rechargeable.

Exposé de l'art antérieur

On distingue généralement deux catégories de transpondeurs selon qu'ils sont ou non équipés d'une batterie.
Les transpondeurs dits passifs extraient l'énergie nécessaire au fonctionnement des circuits électroniques qu'ils comportent d'un champ haute fréquence rayonné par un terminal avec lequel ils communiquent. De tels transpondeurs sont généralement réservés aux transmissions à faible distance (de l'ordre de quelques mètres). Le stockage de l'énergie captée du terminal s'effectue par un condensateur connecté à l'antenne du transpondeur.
Les transpondeurs dits actifs auxquels s'applique plus particulièrement la présente invention comportent une batterie d'où ils tirent l'énergie nécessaire à leur fonctionnement. De tels transpondeurs sont susceptibles de fonctionner à plus grande portée (jusqu'à quelques centaines de mètres) dans la mesure où ils peuvent se passer d'un transfert d'énergie entre le terminal et le transpondeur.
On connaît également des transpondeurs actifs qui profitent de situations dans lesquelles ils se trouvent à faible distance d'un terminal pour recharger la batterie qu'ils comportent.
Par exemple, le document EP-A-0 999 517 (ou US-B-6,462,647) décrit un transpondeur actif rechargeable équipé d'un condensateur de stockage pour stocker de l'énergie provenant d'un signal radioélectrique reçu, des moyens de charge étant prévus pour recharger une batterie à partir de l'énergie stockée dans le condensateur.
Le document US-B-6,944,424 décrit une étiquette électronique capable d'être alimentée par une batterie interne et, de façon passive, par un champ radiofréquence. Un dispositif de stockage d'énergie étant couplé à la batterie pour permettre sa recharge.
L'énergie issue du couplage électromagnétique entre le transpondeur et le terminal qui est susceptible d'être utilisée pour recharger la batterie du transpondeur est souvent insuffisante et/ou conduit à un temps de recharge trop long pour être efficace. Il en découle que, dans de nombreux cas, un transpondeur actif cesse en pratique de fonctionner à longue distance une fois que sa batterie d'origine est déchargée, sauf à laisser longuement ce transpondeur à portée d'un terminal pour qu'il se recharge ce qui n'est pas toujours aisé.
Par exemple, dans un véhicule automobile où le transpondeur est constitué par la clé du véhicule, la clé reste à courte distance du terminal que contient le véhicule pendant toute la durée des trajets. Elle peut donc être rechargée pendant cette période. Cependant, lorsque le véhicule n'est pas utilisé, la clé n'est plus à portée du terminal du véhicule et n'est donc pas rechargée.
Dans d'autres applications, il est quasi impossible que le transpondeur reste longtemps à portée du terminal avec lequel il est censé communiquer. Par exemple, pour des cartes à puce utilisées dans les transports, la durée pendant laquelle le transpondeur se trouve à portée d'un terminal correspond généralement au temps d'effectuer un échange d'informations et ne permet pas toujours de recharger correctement une batterie. De plus, pour des questions d'anti collision des échanges entre les nombreux transpondeurs et terminaux qui sont, dans ce genre d'application, proches les uns des autres, la communication (donc la recharge) n'est établie qu'en couplage très proche (moins de 10 centimètres), ce qui revient en pratique à devoir poser la carte sur le boîtier du terminal dans une zone désignée correspondant au plus près de l'antenne.
De plus, des transpondeurs d'un type donné ne sont généralement capables d'être rechargés qu'à partir de terminaux dédiés, ce qui n'est pas toujours commode.
Le document EP-A-1 154 367 décrit une borne propre à communiquer avec un transpondeur électromagnétique, et capable de valider la présence d'un transpondeur dans son champ. Ce document prévoit de modifier la valeur d'un élément capacitif du circuit oscillant pour modifier l'accord de ce circuit.

Résumé

Il serait souhaitable de disposer d'un transpondeur actif rechargeable, d'un terminal de recharge et/ou de communication avec des transpondeurs, d'un système de transpondeurs actifs rechargeables, qui pallient tout ou partie des inconvénients des systèmes actuels.
En particulier, il serait souhaitable de disposer d'un terminal capable de recharger de façon optimisée un transpondeur actif en tirant profit même de courtes périodes d'exposition du transpondeur au champ de téléalimentation.

Il serait également souhaitable de préserver les fonctionnalités d'un transpondeur actif et d'un transpondeur passif au sein d'un même dispositif.

Il serait également souhaitable qu'un transpondeur actif puisse se recharger lorsqu'il est à portée de différents terminaux sans requérir des terminaux dédiés.

Plus généralement, il serait souhaitable d'optimiser le transfert d'énergie d'un terminal vers un transpondeur.

Pour atteindre tout ou partie de ces objets ainsi que d'autres, il est prévu un procédé de configuration d'un terminal apte à émettre un champ radiofréquence à destination d'un transpondeur, dans lequel, en présence d'un transpondeur à portée du terminal, la résistance série d'un circuit oscillant du terminal est adaptée, en fonction d'une valeur à vide, qui dépend d'un fonctionnement du terminal alors qu'aucun transpondeur n'est dans son champ.

Selon un mode de réalisation, ladite valeur à vide est caractéristique du courant dans le circuit oscillant du terminal.

Selon un mode de réalisation, le procédé comporte les étapes de :

mesurer une information représentative du courant dans le circuit oscillant du terminal avec une première valeur de résistance série de ce circuit oscillant ;

comparer cette information à ladite valeur à vide ; et

modifier la résistance série vers une deuxième valeur choisie en fonction de la première valeur, de l'information mesurée et de ladite valeur à vide.

Selon un mode de réalisation, la valeur de la résistance série est choisie pour que le rapport entre l'information mesurée et ladite valeur à vide soit approximativement égal à 2.

Selon un mode de réalisation, un cycle de charge d'une batterie que comporte le transpondeur est déclenché une fois la valeur de la résistance série fixée.

Il est également prévu un terminal de génération d'un champ à destination d'un transpondeur, comportant un circuit oscillant équipé d'une boucle de régulation de phase et d'un circuit de résistances commutables dont la valeur est sélectionnée à partir d'une estimation du coefficient de couplage avec le transpondeur.

Selon un mode de réalisation, la valeur de la résistance est choisie conformément au procédé décrit ci-dessus.

Il est également prévu un appareil portatif comportant un terminal.

Il est également prévu un transpondeur apte à communiquer avec un terminal et à être rechargé par celui-ci.

Selon un mode de réalisation, le transpondeur comporte des moyens pour transmettre au terminal une information sur le niveau de charge de sa batterie.

Il est également prévu un système de communication comportant :

un terminal ; et

un transpondeur.

Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :

la figure 1 représente de façon très schématique un exemple de système de communication radiofréquence à transpondeur actif ;

la figure 2 est un schéma blocs simplifié du terminal de la figure 1 ;

la figure 3 est un schéma blocs simplifié du transpondeur de la figure 1 ;

la figure 4 illustre l'évolution de la tension aux bornes du circuit résonant du transpondeur en fonction d'un couplage normalisé ;

la figure 5 est un schéma blocs partiel illustrant un autre mode de réalisation d'un circuit de résistances commandables du terminal de la figure 2 ;

les figures 6A, 6B et 6C sont des graphes illustrant le fonctionnement du terminal ;

la figure 7 est un schéma partiel d'un autre mode de réalisation d'un circuit d'adaptation côté terminal ;

la figure 8 est un organigramme illustrant un mode de mise en oeuvre d'un procédé de réglage du terminal ;

la figure 9 représente de façon très schématique une carte à puce du type auquel s'applique à titre d'exemple la présente invention ; et

la figure 10 représente de façon très schématique un téléphone mobile du type auquel s'applique à titre d'exemple la présente invention.

Description détaillée

De mêmes éléments ont été désignés par de mêmes références aux différentes figures. Pour des raisons de clarté, seuls les étapes et éléments utiles à la compréhension de l'invention ont été représentés et seront décrits. En particulier, la provenance et la destination des données transmises lors des communications entre un transpondeur et un terminal n'ont pas été détaillées, l'invention étant compatible avec toute communication usuelle.

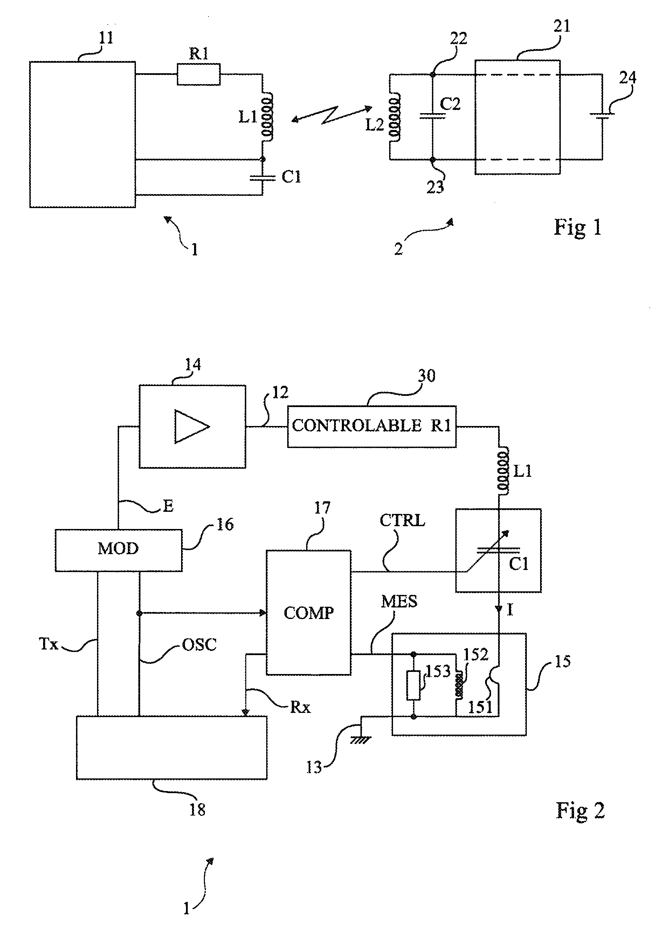

La figure 1 représente, de façon très schématique et simplifiée, un exemple de système de communication et de téléalimentation comportant un terminal 1 ou borne de lecture et/ou d'écriture, et un transpondeur 2.

Généralement, le terminal 1 comporte un circuit oscillant série, formé d'une inductance L1 en série avec un condensateur C1 et une résistance R1. Ce circuit oscillant série est commandé par un dispositif 11 comportant, entre autres et de façon non limitative, un amplificateur ou coupleur d'antenne et un circuit de commande et d'exploitation des transmissions pourvu notamment d'un modulateur/démodulateur et d'un circuit (généralement un microprocesseur) de traitement des commandes et des données. Le dispositif 11 communique généralement avec différents circuits d'entrée/sortie (clavier, écran, élément d'échange avec un serveur, etc.) et/ou de traitement non représentés. Les éléments du terminal 1 tirent l'énergie nécessaire à leur fonctionnement d'un circuit d'alimentation (non représenté) raccordé, par exemple, au réseau de distribution électrique ou à une batterie (par exemple, celle d'un véhicule automobile ou d'un téléphone ou ordinateur portable).

Un transpondeur actif 2 apte à coopérer avec un terminal 1 comporte un circuit oscillant, par exemple parallèle, formé d'une inductance L2 en parallèle avec un condensateur C2 entre deux bornes 22 et 23 d'entrée d'un circuit 21 de commande et de traitement. Dans l'exemple représenté, le transpondeur 2 comporte également une batterie rechargeable 24 susceptible de fournir l'alimentation des différents éléments du transpondeur 2, au moins lorsque celui-ci n'est pas à courte portée d'un terminal. Les bornes 22 et 23 sont, en pratique, reliées à l'entrée d'un élément de redressement (non représenté en figure 1) dont les sorties constituent des bornes d'alimentation des circuits internes au transpondeur. Ces circuits comportent généralement une mémoire et un modulateur pour transmettre des informations au terminal. Selon le type de transpondeur (dépendant de l'application et des tâches qu'il est censé effectuer), ces circuits peuvent également comporter un démodulateur des signaux éventuellement reçus du terminal, un microprocesseur et divers autres circuits de traitement.

Les circuits oscillants du terminal et du transpondeur sont généralement accordés sur une même fréquence correspondant à la fréquence d'un signal d'excitation du circuit oscillant du terminal. Ce signal haute fréquence (par exemple, 13,56 MHz) sert non seulement de porteuse de transmission de données du terminal vers le transpondeur, mais également de porteuse de téléalimentation à destination des transpondeurs se trouvant dans le champ du terminal. Quand un transpondeur 2 se trouve dans le champ d'un terminal 1, une tension haute fréquence est engendrée aux bornes 21 et 23 du circuit résonant du transpondeur. Cette tension sert, d'une part à fournir la tension d'alimentation des circuits électroniques 21 du transpondeur lorsque celui-ci est en mode passif et, d'autre part, peut servir à charger sa batterie 24, cette batterie servant à alimenter les circuits du transpondeur lorsqu'il n'est pas à portée d'un terminal.

La figure 2 est un schéma blocs d'un mode de réalisation d'un terminal 1. Comme indiqué précédemment, le terminal 1 comporte un circuit oscillant formé d'une inductance ou antenne L1 en série avec un élément capacitif C1 et un élément résistif R1. Dans l'exemple de la figure 2, ces éléments sont connectés entre une borne 12 de sortie d'un amplificateur ou coupleur d'antenne 14 et une borne 13 à un potentiel de référence (généralement la masse). Un élément 15 de mesure du courant dans le circuit oscillant est intercalé, par exemple, entre l'élément capacitif C1 et la masse 13. Cet élément de mesure 15 fait partie d'une boucle de régulation de phase qui sera décrite plus loin. L'amplificateur 14 reçoit un signal E de transmission haute fréquence, issu d'un modulateur 16 (MOD) qui reçoit une fréquence de référence (signal OSC) par exemple d'un oscillateur à quartz (non représenté). Le modulateur 16 reçoit, si besoin, un signal Tx de données à transmettre et, en l'absence de transmission de données depuis le terminal, fournit la porteuse haute fréquence (par exemple, à 13,56 MHz) propre à téléalimenter un transpondeur. L'élément capacitif C1 est un élément à capacité variable et commandable par un signal CTRL. On réalise une régulation de phase du courant dans l'antenne L1 par rapport à un signal de référence. Cette régulation est une régulation du signal haute fréquence, c'est-à-dire du signal de la porteuse correspondant au signal E en l'absence de données à transmettre. La régulation est effectuée en faisant varier la capacité C1 du circuit oscillant du terminal de façon à maintenir le courant dans l'antenne en relation de phase constante avec le signal de référence. Ce signal de référence correspond, par exemple, au signal OSC fourni par l'oscillateur au modulateur. Le signal CTRL est issu d'un circuit 17 (COMP) dont le rôle est de détecter l'écart de phase par rapport au signal de référence et de modifier en conséquence la capacité de l'élément C1. La mesure de phase est effectuée, par exemple, à partir d'une mesure du courant I dans le circuit oscillant grâce à l'élément de mesure 15. Dans l'exemple représenté, un transformateur d'intensité comporte un enroulement primaire 151 entre l'élément C1 et la borne 13 de masse, et un enroulement secondaire 152 dont une première borne est connectée directement à la masse et dont l'autre borne fournit un signal MES indicateur du résultat de la mesure. Une résistance 153 de conversion courant-tension est connectée en parallèle avec l'enroulement secondaire 152. Le résultat de la mesure MES est envoyé au comparateur 17 qui asservit en conséquence l'élément capacitif C1 au moyen du signal CTRL.

Dans le mode de réalisation illustré en figure 2, le comparateur 17 utilise le même démodulateur de phase (non représenté) que celui qui sert à démoduler le signal provenant du transpondeur et que reçoit éventuellement le circuit oscillant. Par conséquent, le comparateur 17 fournit un signal Rx restituant une rétromodulation éventuelle de données reçues d'un transpondeur à un bloc 18 symbolisant le reste des circuits électroniques du terminal.

Le temps de réponse de la boucle de régulation de phase est choisi suffisamment long pour ne pas gêner la rétromodulation éventuelle provenant d'un transpondeur, et suffisamment court devant la vitesse de passage d'un transpondeur dans le champ du terminal. On peut parler de régulation statique par rapport aux fréquences de modulation (par exemple, une fréquence de la porteuse de téléalimentation de 13,56 MHz et une fréquence de rétromodulation de 847,5 kHz utilisée pour transmettre des données du transpondeur vers la borne).

En variante au transformateur d'intensité de la figure 2, on pourra utiliser d'autres éléments de mesure du courant (par exemple, une résistance).

Un exemple de terminal à régulation de phase est décrit dans le document EP-A-0 857 981.

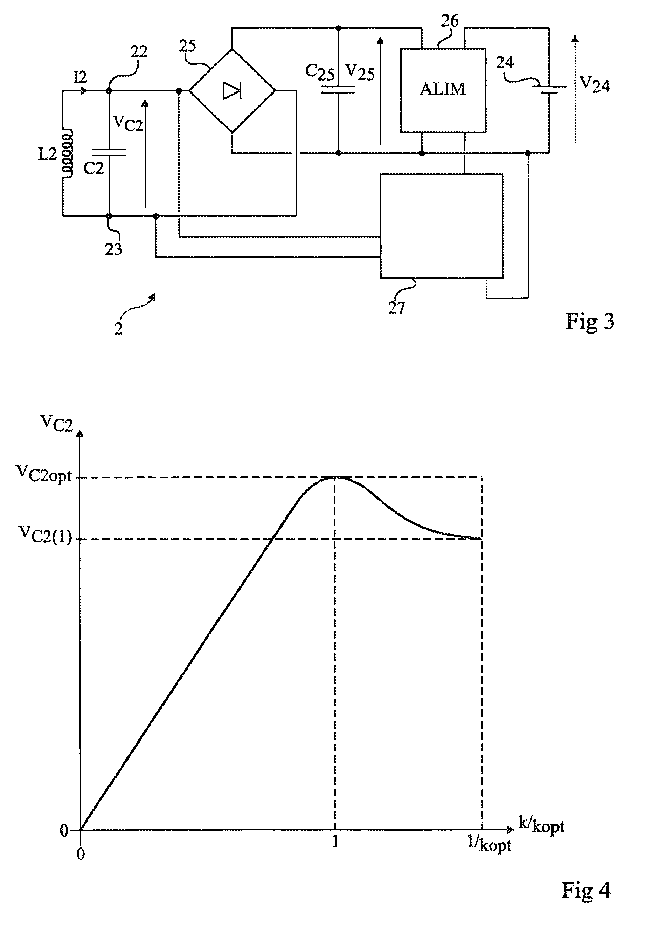

La figure 3 représente un mode de réalisation d'un transpondeur 2. Aux bornes 22 et 23 du circuit oscillant (inductance ou antenne L2 et élément capacitif C2 en parallèle), est connecté un élément de redressement 25, par exemple un pont redresseur double alternance. Les sorties redressées du pont 25 sont reliées, par un élément capacitif $C_{25}$ de lissage et fournissent une tension $V_{25}$, à un circuit 26 (ALIM) de gestion de l'alimentation du transpondeur. Ce circuit 26 reçoit par ailleurs une tension $V_{24}$, fournie par la batterie 24 du transpondeur. Le circuit 26 fournit aux autres circuits du transpondeur symbolisés par bloc 27 l'énergie nécessaire à leur fonctionnement. Les éléments 25, $C_{25}$, 26 et 27 sont, en figure 1, inclus dans le bloc 21. Le circuit 27 prélève une information aux bornes 22 et 23 du circuit résonant pour être capable de démoduler les éventuelles informations reçues du terminal avant redressement. Par ailleurs, le circuit 27 comporte des éléments capacitifs et/ou résistifs, dits de rétromodulation, aptes à moduler la charge (load) que constitue le transpondeur sur le champ généré par le terminal. Cette modification de charge se traduit côté terminal par une modification du courant ou de la tension de son circuit oscillant (en supposant que l'amplificateur ou coupleur d'antenne est adapté à fournir un courant constant). Cette modification de courant ou de tension captée par le transformateur d'intensité (15, figure 2) ou tout autre élément de mesure (par exemple la mesure de la tension aux bornes de l'élément capacitif C1) permet au terminal de décoder les informations reçues du transpondeur.

Une difficulté est de placer le transpondeur à recharger dans une position correspondant à un couplage inductif produisant une source d'énergie suffisante pour recharger sa batterie avec un temps de recharge acceptable.

Le fait que la phase soit régulée côté terminal permet d'exploiter des mesures de courant et de tension dans le circuit oscillant du terminal pour en déduire des informations relatives au couplage du transpondeur lorsqu'il est dans le champ de la borne.

Ces informations prennent en compte, notamment, le couplage entre le transpondeur et le terminal, c'est-à-dire le coefficient de couplage entre le circuit oscillant du terminal et celui du transpondeur. Ce coefficient de couplage dépend essentiellement de la distance séparant le transpondeur du terminal. Le coefficient de couplage, noté k, entre les circuits oscillants d'un transpondeur et d'un terminal est toujours compris entre 0 et 1. Ce coefficient peut être défini par la formule :

$$k = \frac{M}{\sqrt{L1L2}}, \qquad\qquad\qquad \text{(formule 1)}$$

dans laquelle M représente l'inductance mutuelle entre les inductances L1 et L2 des circuits oscillants du terminal et du transpondeur.

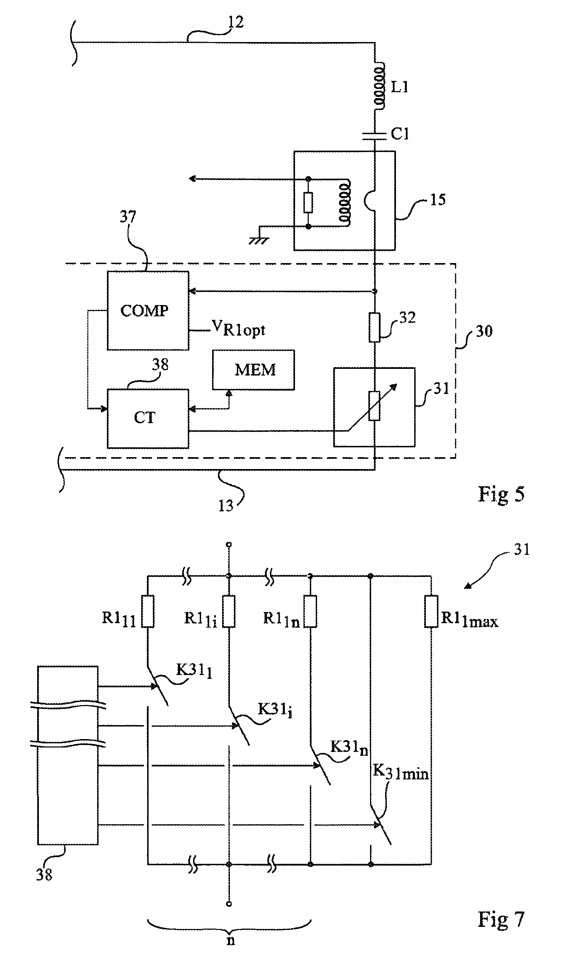

On utilise les différentes relations liant les grandeurs électriques mesurables par le terminal dans différentes configurations de fonctionnement avec un transpondeur pour optimiser la recharge d'une batterie équipant le transpondeur et plus généralement le transfert d'énergie vers son élément de stockage d'énergie $C_{25}$ ou 26. Pour cela, la résistance série R1 du circuit oscillant de la borne est adaptée pour optimiser le couplage. Cette fonctionnalité est illustrée en figure 2 par un bloc 30 (CONTROLABLE R1) et sera mieux comprise en relation avec la description des figures 4 et 5.

On utilise la résistance R1 pour régler électriquement le terminal chargeur afin de placer le système de couplage dans une position dite de couplage optimum. Cette position correspond à celle dans laquelle se produit un maximum de transferts d'énergie du chargeur vers le transpondeur à charger.

A la différence d'un réglage de la capacité C1 du circuit oscillant du terminal (comme par exemple dans le document EP-A-1 154 367 susmentionné) qui intervient sur l'accord du circuit oscillant, une modification de la valeur de la résistance modifie le niveau d'amortissement (l'atténuation).

Une information disponible côté terminal lorsque celui-ci est équipé d'une boucle de régulation de phase est le courant I dans le circuit oscillant série de la borne. Ce courant est lié à une tension (notée Vg), dite de générateur, excitant le circuit oscillant, et à l'impédance apparente $Z1_{app}$ du circuit oscillant, par la relation suivante :

$$I = \frac{Vg}{Z1_{app}} . \qquad \text{(formule 2)}$$

Le fait de réguler la phase du circuit oscillant sur une valeur de référence permet que la variation de distance d'un transpondeur entrant dans le champ d'un terminal ne se traduise que par une modification de la partie réelle de l'impédance de ce circuit oscillant. En effet, toutes les variations qui auraient tendance à modifier, de façon statique devant les fréquences de modulation, la partie imaginaire de la charge (load) constituée par le transpondeur, sont compensées par la boucle de régulation de phase. Ainsi, on s'assure qu'en fonctionnement statique la partie imaginaire de l'impédance $Z1_{app}$ est nulle. Par conséquent, l'impédance $Z1_{app}$ devient égale à la résistance apparente $R1_{app}$ et peut s'exprimer sous la forme :

$$Z1_{app} = R1_{app} = R1 + a^2 \cdot \frac{L2}{R2 \cdot C2} , \qquad \text{(formule 3)}$$

avec

$$a^2 = \frac{k^2 \cdot \omega^2 \cdot L1 \cdot L2}{X2^2 + \left(\frac{L2}{R2 \cdot C2}\right)^2} , \qquad \text{(formule 4)}$$

où $\omega$ représente la pulsation du signal, X2 représente la partie imaginaire de l'impédance du circuit oscillant du transpondeur ($X2 = \omega L2 - 1/\omega C2$) , et où R2 représente la charge (load) constituée par les éléments du transpondeur sur son propre circuit oscillant (éléments du circuit 21 modélisés par la résistance R2 en parallèle sur l'inductance L2 et le condensateur C2). En d'autres termes, la résistance R2 représente la résistance équivalente de tous les circuits (microprocesseur, moyen de rétromodulation, etc.) du transpondeur, ramenée en parallèle sur le condensateur C2 et l'inductance L2. Dans la formule 3 ci-dessus, on a négligé la résistance série de l'inductance L1 qui s'ajoute aux deux autres termes. On peut également considérer que la valeur de cette résistance série est, par simplification, incluse dans la valeur de la résistance R1.

En combinant les formules 2, 3 et 4, on peut exprimer le courant I de la façon suivante :

$$I = \frac{Vg}{R1 + k^2 \cdot \dfrac{\omega^2 \cdot L1 \cdot L2^2}{Z2^2 \cdot R2 \cdot C2}} , \qquad \text{(formule 5)}$$

avec :

$$Z2^2 = X2^2 + \left(\frac{L2}{R2 \cdot C2}\right)^2 , \qquad \text{(formule 6)}$$

Z2 représentant l'impédance du transpondeur.

Par ailleurs, côté transpondeur, on peut écrire :

$$Z2 \cdot I2 = M \cdot \omega \cdot I = k \cdot \sqrt{L1 \cdot L2} \cdot \omega \cdot I, \qquad \text{(formule 7)}$$

où I2 représente le courant dans le circuit oscillant du transpondeur. D'où :

$$I2 = \frac{k \cdot \sqrt{L1 \cdot L2} \cdot \omega \cdot I}{Z2}. \qquad \text{(formule 8)}$$

La formule 8 combinée aux formules 4 et 6 se réduit à l'expression :

$$I2 = a.I. \qquad \text{(formule 9)}$$

La tension récupérée $V_{C2}$ aux bornes du condensateur C2 du transpondeur 2 est donnée par la relation :

$$V_{C2} = \frac{I2}{\omega \cdot C2} = \frac{a \cdot I}{\omega \cdot C2}. \qquad \text{(formule 10)}$$

En première approximation, on peut écrire en combinant les formules 5 et 6 dans lesquelles la partie imaginaire X2 de l'impédance Z2 est au premier ordre, proche de 0 (le circuit est accordé) :

$$I = \frac{Vg}{R1 + k^2 \cdot \dfrac{L1}{L2} \cdot R2}, \qquad \text{(formule 11)}$$

et la tension récupérée $V_{C2}$ peut être calculée dans les mêmes conditions par la formule :

$$V_{C2} = k \cdot \sqrt{\frac{L1}{L2}} \cdot \frac{Vg}{\dfrac{R1}{R2} + k^2 \cdot \dfrac{L1}{L2}}. \qquad \text{(formule 12)}$$

Parmi les mesures de grandeur électrique qui sont aisément réalisables côté terminal, on prévoit d'utiliser des valeurs à vide et au couplage maximal qui seront définies ci-après.

Les valeurs à vide représentent le courant et la tension quand aucun transpondeur n'est présent dans le champ du terminal. Dans ce fonctionnement à vide, l'impédance apparente, notée $Z1_{vide}$, du circuit oscillant du terminal ne dépend plus que de ses composants R1, L1 et C1. De plus, grâce à la régulation de phase, la partie imaginaire de cette impédance est toujours nulle. On peut donc écrire :

$$I_{vide} = \frac{Vg}{R1}. \qquad \text{(formule 13)}$$

Le couplage optimum est défini comme étant la position à laquelle la tension récupérée $V_{C2}$ aux bornes du transpondeur est maximale. Ce couplage optimum, noté $k_{opt}$, peut s'exprimer :

$$k_{opt} = \sqrt{\frac{L2 \cdot R1}{L1 \cdot R2}} \qquad \text{(formule 14)}$$

La tension maximale $V_{C2opt}$ au couplage optimum est donnée par la formule :

$$V_{C2opt} = \sqrt{\frac{R2}{R1}} \cdot \frac{Vg}{2} . \qquad \text{(formule 15)}$$

Une autre condition de fonctionnement, déterminable grâce à la régulation de phase, correspond à un couplage de référence noté $k_{ref}$ qui est établi pour une distance donnée, dite de référence, entre le transpondeur et le terminal. Cette condition de référence correspond, par exemple, à un étalonnage ou une initialisation du système dans une situation donnée. De préférence, cette condition correspond à un couplage maximal qui correspond à un éloignement minimal entre le transpondeur et le terminal, par exemple lorsque le transpondeur est posé sur le terminal, donc le plus près possible de l'antenne.

On fera par la suite référence à cette condition de couplage maximal, noté $k_{max}$, mais tout ce qui va être décrit se transpose à une condition de référence en remplaçant les grandeurs identifiées au couplage maximal par ces grandeurs au couplage de référence.

On peut réécrire les formules 12 et 13 du courant I et de la tension récupérée $V_{C2}$ en fonction du couplage normalisé par le couplage optimum ($k/k_{opt}$). Toujours en supposant la partie imaginaire X2 de l'impédance Z2 proche de 0, on obtient :

$$V_{C2} = 2 \cdot V_{C2opt} \cdot \frac{\dfrac{k}{k_{opt}}}{1 + \left(\dfrac{k}{k_{opt}}\right)^2} , \qquad \text{(formule 16)}$$

$$I = \frac{I_{vide}}{1 + \left(\dfrac{k}{k_{opt}}\right)^2} . \qquad \text{(formule 17)}$$

On peut donc écrire :

$$\left(\frac{k}{k_{opt}}\right)^2 = \frac{I_{vide}}{I} - 1 . \qquad \text{(formule 18)}$$

Par ailleurs, la valeur de la tension $V_{R1}$ aux bornes de la résistance R1 du terminal est donnée par :

$$V_{R1} = \frac{Vg}{1 + \left(\dfrac{k}{k_{opt}}\right)^2} . \qquad \text{(formule 19)}$$

Au couplage optimum, c'est-à-dire quand $k = k_{opt}$ :

$$I_{opt} = \frac{I_{vide}}{2} = \frac{Vg}{2 \cdot R1}, \text{ et } V_{R1(opt)} = \frac{Vg}{2}.$$

La tension aux bornes du circuit oscillant du terminal est donnée par :

$$V_1 = \frac{Vg}{1 + \left(\dfrac{k}{k_{opt}}\right)^2}$$

et atteint également la valeur Vg/2 en position de couplage optimum.

On peut utiliser les informations relatives aux couplages optimum et maximum pour adapter le terminal 1 au transpondeur 2 qu'il doit recharger. Par exemple, un type de transpondeur peut être dédié à un type de couplage (lointain ou proche) avec un lecteur. Le lecteur peut ainsi supporter plusieurs modes de fonctionnement selon la position du couplage maximale avec le transpondeur, en adaptant sa résistance R1 au mode de fonctionnement du transpondeur.

La figure 4 représente un exemple d'allure de la tension $V_{C2}$ récupérée côté transpondeur en fonction du couplage normalisé $k/k_{opt}$.

La courbe part de l'origine des ordonnées (tension nulle) pour un couplage nul. Cela correspond à un éloignement du transpondeur et du terminal tel qu'aucun signal n'est capté par le transpondeur. La tension $V_{C2}$ atteint un maximum $V_{C2opt}$ pour un coefficient de couplage $k_{opt}$ optimum ($k/k_{opt} = 1$), puis décroît vers une valeur intermédiaire $V_{C2(1)}$ atteinte au couplage 1.

La position qui correspond à un couplage nul correspond à une position du terminal à vide, donc au courant à vide ($I_{vide}$). Dans cette position, la tension $V_{R1}$ est égale à la valeur à vide Vg.

Dans la position de couplage optimal ($k = k_{opt}$), le courant $I_{opt} = I_{vide}/2$ et la tension $V_{R1opt} = Vg/2$.

Dans une position de couplage k égale à 1, le courant I correspond à $\dfrac{I_{vide}}{1 + \left(\dfrac{1}{k_{opt}}\right)^2}$ et la tension $V_{R1}$

est égale à $\dfrac{Vg}{1 + \left(\dfrac{1}{k_{opt}}\right)^2}$. Cette position est une position théorique dans la mesure où un coefficient de couplage k = 1 n'est en réalité jamais atteint.

Quand le transpondeur est posé sur le terminal, on considère que le couplage est à une valeur maximale et on peut écrire :

$$I_{k_{max}} = \frac{I_{vide}}{1 + \left(\dfrac{k_{max}}{k_{opt}}\right)^2}, \text{ et} \qquad\qquad \text{(formule 20)}$$

$$V_{R1_{k\,max}} = \frac{Vg}{1 + \left(\dfrac{k_{max}}{k_{opt}}\right)^2}. \qquad\qquad \text{(formule 21)}$$

Ainsi, la mesure du courant $I_{max}$ ou de la tension $V_{R1max}$ dans une phase d'apprentissage où l'objet portable à recharger est posé sur le terminal suffit pour déterminer le couplage maximal $k_{max}$ par rapport au couplage optimum $k_{opt}$.

Si on est dans une situation où $I_{max}$ est inférieur à $I_{vide}/2$ (ou $V_{R1max}$ est inférieur à $Vg/2$), on est dans une position où le couplage maximal est supérieur au couplage optimum. Le couplage optimum correspond alors à une position du transpondeur plus éloignée de la borne que lorsque celui-ci est posé dessus. En d'autres termes, le couplage optimum peut être atteint en écartant le transpondeur du terminal et il existe une distance entre le transpondeur et le chargeur pour laquelle la tension récupérée $V_{C2}$ passe alors par le maximum $V_{C2opt}$. Le maximum $V_{C2opt}$ ne correspond pas à la valeur $V_{C2max}$ et cette valeur $V_{C2max}$ est inférieure à $V_{C2opt}$.

Si le courant $I_{max}$ est supérieur à la valeur $I_{vide}/2$ (ou $V_{R1max}$ est supérieur à $Vg/2$), alors on est dans une position où le couplage maximal est inférieur au couplage optimum. Cela signifie que le couplage optimum $k_{opt}$ correspond à une valeur théorique jamais atteinte physiquement puisque dans ce cas la tension récupérée au couplage maximal $V_{C2max}$ ne passera pas par le maximum $V_{C2opt}$ du couplage optimum. En d'autres termes, au couplage maximal, la valeur $V_{C2max}$ sera toujours inférieure à la valeur $V_{C2opt}$.

Dans les deux cas ci-dessus, le transpondeur à recharger ne peut pas en principe bénéficier du maximum possible de tension $V_{C2opt}$ pour recharger la batterie embarquée puisque la valeur $V_{C2max}$ est inférieure à la valeur $V_{C2opt}$.

On prévoit alors de modifier la valeur de la résistance série (R1) du terminal afin que le point de couplage maximal corresponde au couplage optimum pour bénéficier ainsi du maximum de tension récupérable $V_{C2opt}$.

Pour cela, au couplage maximum, lorsque le transpondeur est posé sur le terminal, on mesure la valeur du courant I, soit $I_{max0}$ avec une valeur initiale, notée $R1_0$, de la résistance R1. Comme le terminal aura préalablement mesuré et stocké en mémoire la valeur $I_{vide}$, on peut déterminer s'il faut modifier la valeur de la résistance R1.

Si le rapport $I_{vide}/I_{max0}$ est supérieur à 2 ($k_{max}/k_{opt0} > 1$), où $k_{opt0}$ désigne le couplage optimal avec la valeur $R1_0$, le couplage optimum du système terminal-transpondeur correspond à une position plus éloignée du terminal que lorsque le transpondeur est posé dessus et ce avec la résistance $R1_0$.

Si le rapport $I_{vide}/I_{max0}$ est inférieur à 2 ($k_{max}/k_{opt0} > 1$), le couplage optimum $k_{opt}$ correspond à une valeur théorique jamais atteinte physiquement avec la valeur de résistance $R1_0$.

Dans les deux cas, il reste néanmoins possible de modifier la valeur de la résistance R1 de façon que sa nouvelle valeur, notée $R1_1$, fasse coïncider le couplage optimum du système $k_{opt}$ avec la valeur du couplage maximum $k_{max}$, de façon à bénéficier du maximum de tension $V_{C20pt}$ récupérable pour recharger la batterie du transpondeur ou charger sa capacité 25. Ainsi, on adapte la valeur du couplage optimum initial du système en modifiant la valeur de la résistance série R1 pour qu'elle corresponde au couplage maximum du transpondeur, c'est-à-dire une fois posé sur le terminal en position de recharge. Cela revient à passer de la valeur $R1_0$ à une valeur $R1_1$ telle que la valeur du courant I atteigne $I_{vide}/2$, c'est-à-dire corresponde au couplage optimum critique.

La formule 20 vue précédemment permet d'écrire :

pour la valeur $R1_0$ : $\left(\dfrac{k_{max}}{k_{opt0}}\right)^2 = \dfrac{I_{vide}}{I_{max\,0}} - 1$ , avec $k_{opt0} = \sqrt{\dfrac{L2}{R2} \cdot \dfrac{R1_0}{L1}}$ , et

pour la valeur $R1_1$ :

$$\left(\frac{k_{max}}{k_{opt1}}\right)^2 = \frac{I_{vide}}{I_{max\,1}} - 1 = 1$$

(puisque par définition $R1_1$ permet d'atteindre le couplage optimum, ce qui revient à dire que $I_{vide}/I_{max1} = 2$) , avec

$k_{opt1} = \sqrt{\dfrac{L2}{R2} \cdot \dfrac{R1_1}{L1}}$ , où $I_{max1}$ et $k_{opt1}$ désignent respectivement le courant maximum $I_{max}$ et le couplage optimum $k_{opt}$ pour la valeur $R1_1$ de la résistance R1.

Du système d'équations ci-dessus, on déduit que :

$$\left(\frac{k}{k_{opt1}}\right)^2 = \frac{R1_0}{R1_1} \cdot \left(\frac{k}{k_{opt0}}\right)^2, \qquad\qquad (\text{formule 22})$$

et que :

$$R1_1 = R1_0 \cdot \left(\frac{I_{vide}}{I_{max\ 0}} - 1\right). \qquad\qquad (\text{formule 23})$$

On règle donc la valeur de la résistance R1 soit en la diminuant quand la valeur $k_{max}$ est inférieure à la valeur $k_{opt}$, soit en l'augmentant quand la valeur $k_{max}$ est supérieure à la valeur $k_{opt}$, de façon que la valeur du courant I atteigne $I_{vide}/2$, c'est-à-dire corresponde au couplage optimum critique. On peut également régler la valeur de la résistance R1 pour atteindre le couplage optimum à partir de mesures de la tension $V_{R1}$ aux bornes de la résistance R1. Dans ce cas, on règle la valeur de la résistance R1 pour que la tension $V_{R1}$ (ou la tension $V_{L1C1}$) aux bornes du circuit oscillant atteigne la valeur Vg/2 au couplage optimum.

La valeur $R1_0$ pourra correspondre à une position de couplage correspondant soit au maximum $k_{max}$, soit à toute autre valeur de référence du coefficient de couplage dans le cas où le transpondeur actif se trouve à une distance donnée du terminal. Ce sera par exemple le cas d'un transpondeur monté sur une roue de véhicule qui se recharge à chaque passage par une position dite de référence. Dans un exemple de ce type, la phase d'apprentissage peut comporter une étape préliminaire supplémentaire dans laquelle, au cours d'une rotation complète de la roue, le système relève la position correspondante au maximum de la tension récupérée $V_{C2}$ et mesure à cette position de couplage maximum de référence le courant $I_{max}$. Le terminal adapte ensuite la valeur de la résistance R1 pour qu'à chaque passage par la position de référence, la tension récupérée $V_{C2}$ corresponde au couplage optimum, donc à la tension maximale récupérable pour recharger l'élément capacitif $C_{25}$ (et le cas échéant la batterie 24 si elle existe) du transpondeur.

La figure 5 est un schéma blocs à rapprocher de celui de la figure 2 illustrant partiellement un mode de réalisation d'un circuit 30. Dans cet exemple, une résistance variable 31 est connectée en série avec une résistance fixe 32, les deux résistances 31 et 32 formant l'élément résistif courant R1 du terminal. La tension aux bornes de cet élément résistif est mesurée et comparée par un circuit de comparaison 37 (COMP) par rapport à une valeur $V_{R1opt}$ qui correspond à la tension au point de couplage optimum. Le résultat fourni par le comparateur 37 sert à asservir la valeur de l'élément résistif 31 sur la valeur $V_{R1opt}$ grâce à un circuit de commande 38 (CT). Les autres éléments du terminal sont identiques à ceux décrits en relation avec la figure 2. Toutefois, dans l'exemple de la figure 5, le circuit 30 est placé côté borne de masse 13 plutôt que côté borne 12 de sortie de l'amplificateur 14 (non représenté en figure 5). Le transformateur d'intensité 15 servant à la mesure pour l'asservissement en phase est intercalé entre l'élément capacitif C1 et le circuit 30. La capacité C1 est de préférence également variable bien que cela n'ait pas été illustré en figure 5.

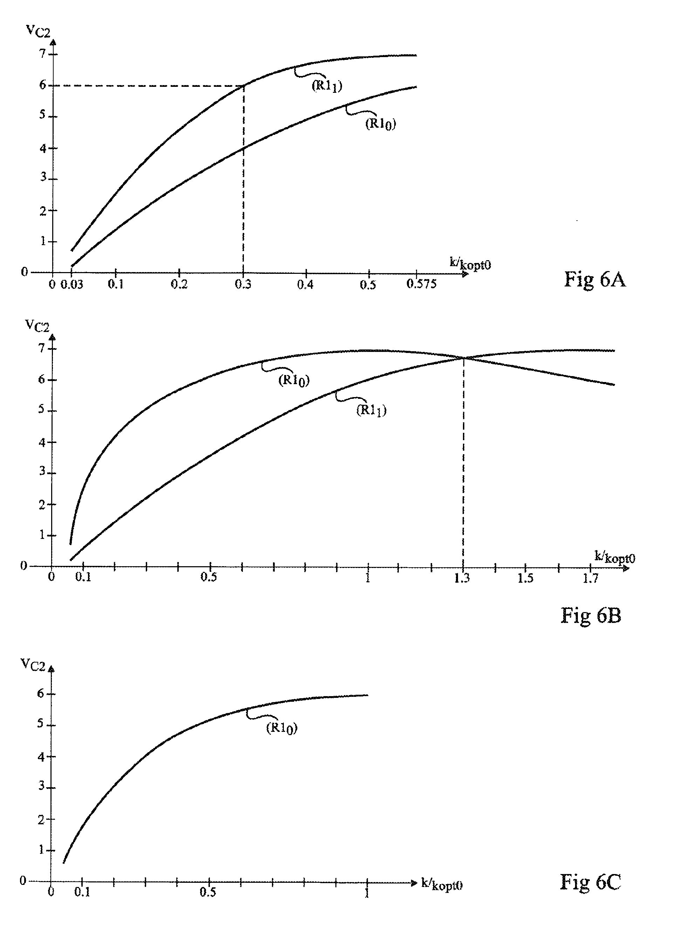

Les figures 6A, 6B et 6C illustrent le fonctionnement du terminal de la figure 5.

Ces courbes illustrent des exemples de relations entre la tension $V_{C2}$ aux bornes de la capacité du transpondeur et le coefficient de couplage normalisé $k/k_{opt0}$. On suppose que la tension souhaitable pour permettre une recharge de la batterie est d'au moins 6 volts. Ce niveau représente le rapport entre la valeur de tension $V_{C2max}$ au couplage $k_{max}$ et la résistance $R1_0$ déterminées comme indiqué ci-dessus. On suppose également un coefficient de couplage $k_{opt0} = 0,3$.

Dans le cas de la figure 6A, on suppose un rapport $I_{vide}/I_{max0}$ de 4/3 entre le courant à vide et le courant maximum avec la résistance $R1_0$. Le rapport entre les coefficients $k_{max0}$ et $k_{opt0}$ est de 0,58. On est donc dans un cas où, avec la résistance $R1_0$, le couplage optimum ne peut pas être atteint. La figure 6A fait ressortir que dans ces conditions, une modification de la valeur de la résistance R1 vers une valeur $R1_1$ choisie comme indiquée ci-dessus permet d'optimiser la recharge. Dans cet exemple, un rapport $R1_1/R1_0$ de 0,33 optimise la recharge en permettant de récupérer une tension $V_{C2}$ de 7 volts pour des éloignements représentant un coefficient k de plus de 0,15 (rapport $k/k_{opt0}$ supérieur à environ 0,5), et de plus de 6 volts en se rapprochant jusqu'à un éloignement représentant un coefficient k de 0,09 (rapport $k/k_{opt0}$ d'environ 0,3).

Dans le cas de la figure 6B, on suppose un rapport $I_{vide}/I_{max0}$ entre le courant à vide et le courant maximum avec la résistance $R1_0$ de 4 (supérieur à 2). Le rapport entre les coefficients $k_{max0}$ et $k_{opt0}$ est de 1,73. On est donc dans un cas où, avec la résistance $R1_0$, il faut éloigner le transpondeur pour atteindre la position optimale. La figure 6B fait ressortir que, dans ces conditions, une modification de la valeur de la résistance R1 vers une valeur $R1_1$ choisie comme indiquée ci-dessus permet d'optimiser la recharge pour les éloignements relativement faibles (inférieurs à l'éloignement optimal avec la résistance $R1_0$). Dans cet exemple, un rapport $R1_1/R1_0$ de 3 permet d'optimiser la recharge en permettant de récupérer une tension $V_{C2}$ de plus de 6,8 volts à partir d'un coefficient k d'environ 0,37 (rapport $k/k_{opt0}$ d'environ 1,3). Pour des éloignements plus importants, la valeur $R1_0$ fournit une recharge plus rapide.

Dans le cas de la figure 6C, on suppose un rapport $I_{vide}/I_{max0}$ entre le courant à vide et le courant maximum avec la résistance $R1_0$ de 2. Le rapport entre les coefficients $k_{max0}$ et $k_{opt0}$ est de 1. La figure 6C fait ressortir que, dans ces conditions, la valeur $R1_1$ donnée par les calculs ci-dessus est identique à la valeur $R1_0$. Un changement de valeur n'apporte donc rien.

La figure 7 représente un exemple de circuit de résistances commutables utilisable pour la mise en oeuvre de la sélection résistive (résistance 31). Dans cet exemple, une résistance $R1_{1max}$ est en parallèle avec un interrupteur $K_{31min}$ ainsi qu'avec n branches de résistances $R1_{1i}$ (i étant compris entre 1 et n) en parallèle. Chaque résistance $R1_{1i}$ est en série avec un interrupteur commandable $K_{31i}$. Ces interrupteurs sont commandés par le circuit 38 en fonction des mesures effectuées. L'interrupteur $K_{31min}$ en position fermée rend la résistance R1 égale à la résistance 32. Quand tous les interrupteurs $K_{31i}$ sont ouverts, la résistance de l'élément 31 vaut $R1_{max}$. Les autres positions donnent des valeurs intermédiaires.

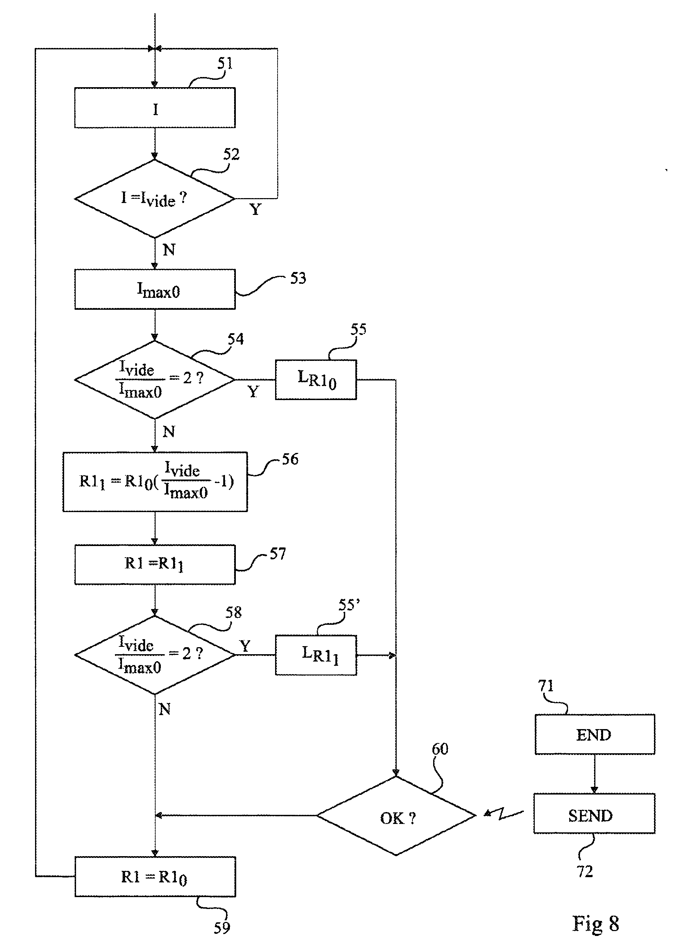

La figure 8 est un organigramme d'un mode de mise en oeuvre du procédé de sélection de la résistance. Cet organigramme illustre le cas d'une exploitation d'une mesure du courant mais se transpose sans difficulté à une exploitation d'une mesure de la tension aux bornes de la résistance R1. Il s'agit toujours d'une information représentative du courant dans le circuit oscillant du terminal.

On suppose que le terminal a au préalable été initialisé à vide et la valeur $I_{vide}$ (ou toute information correspondante) stockée en mémoire. Une telle initialisation peut être effectuée à demeure en fabrication, mais sera de préférence effectuée sur site, voire périodiquement ou à chaque mise sous tension, de façon à tenir compte d'éventuelles perturbations liées à l'environnement du terminal.

En variante, lors d'une première utilisation d'un couple terminal-transpondeur, le terminal affiche un message demandant au porteur de poser le transpondeur pour acquisition. Selon une autre variante, le terminal enregistre un identifiant du transpondeur ou d'une catégorie de transpondeurs avec les données caractéristiques et est ainsi capable de le reconnaître lors d'un passage ultérieur.

On commence par mesurer (bloc 51, I) la valeur du courant dans le circuit oscillant. Cette valeur est comparée (bloc 52, $I = I_{vide}$ ?) à la valeur à vide. En cas d'égalité (sortie Y du bloc 52), cela signifie qu'aucun transpondeur n'est dans le champ et on revient en entrée du bloc 51. Sinon (sortie N du bloc 52), le courant maximum $I_{max0}$ est mesuré avec la valeur de résistance $R1_0$ (bloc 53, $I_{max0}$) en considérant que le transpondeur est à distance minimale (typiquement posé sur le terminal). Puis, le rapport entre le courant à vide et le courant avec la résistance $R1_0$ est comparé à la constante 2 (bloc 54, $I_{vide}/I_{max0} = 2$ ?). Cela revient à comparer le courant mesuré, à une valeur ($I_{vide}/2$) fonction du courant à vide. En cas d'égalité (sortie Y du bloc 54), la batterie commence à être chargée en utilisant la résistance $R1_0$ (bloc 55, $L_{R10}$). Sinon (sortie N du bloc 54), une valeur de résistance $R1_1$ est calculée à partir de la valeur $R1_0$ et du rapport établi précédemment (bloc 56, $R1_1 = R1_0((I_{vide}/I_{max0})-1)$ et la valeur la plus proche est choisie à partir du réseau 31. En variante, on adapte une résistance variable. En d'autres termes, la valeur de la résistance R1 est choisie en fonction de la première valeur ($R1_0$), de l'information mesurée ($I_{max0}$) et de la constante ($I_{vide}/2$). Puis (bloc 57, $R1 = R1_1$), la valeur de résistance du circuit oscillant est réglée (par exemple grâce au réseau 31 de la figure 7) pour correspondre à la valeur $R1_1$ calculée. On vérifie ensuite (bloc 58, $I_{vide}/I_{max1} = 2$ ?) que la valeur choisie correspond au bon couplage. Dans l'affirmative (sortie Y du bloc 58), la recharge est effectuée avec la valeur $R1_1$ (bloc 55', $L_{R11}$). Dans la négative (sortie N du bloc 58), le réglage de la résistance R1 revient à la valeur d'origine $R1_0$ (bloc 59 $R1 = R1_0$) et le processus revient sur la mesure du courant I (bloc 51).

Selon l'exemple représenté, lorsque la recharge du transpondeur s'effectue, que ce soit avec la valeur $R1_0$ ou avec la valeur $R1_1$, le terminal se met en attente (bloc 60, OK ?) d'un message du transpondeur 2 indiquant une fin de recharge. Côté transpondeur 2, lorsque la batterie est intégralement rechargée (bloc 71, END), le transpondeur envoie un message (bloc 72, SEND) à destination du terminal. Lorsque celui-ci reçoit ce message, il est détecté par le bloc 60 qui provoque alors la commutation de la résistance R1 sur la valeur initiale $R1_0$ (bloc 59). Puis, on revient au bloc de surveillance de la valeur du courant.

En variante, l'étape 58 est omise et l'étape 57 est directement suivie par l'étape 55'.

Selon une autre variante, l'adaptation de la valeur de la résistance R1 est effectuée en cours de recharge. Il suffit de reproduire les étapes des blocs 51, 52, 53, 54, 55, 56, 57 et 55' périodiquement en remplaçant $R1_0$ par la valeur courante de la résistance R1.

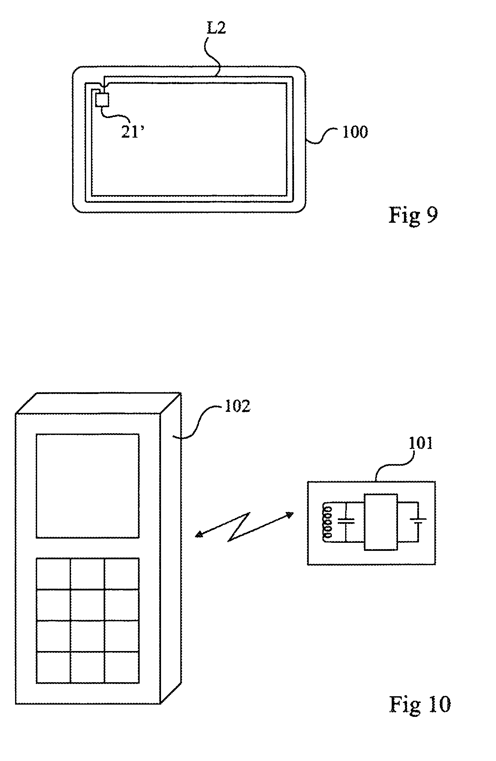

La figure 9 représente un exemple de carte à puce 100 à laquelle s'applique l'invention. Dans cet exemple, le circuit 21 est une puce de circuit intégré comprenant la batterie 24 et l'élément capacitif C2. L'antenne L2 est formée d'un enroulement plan sur la carte à puce ou intégrée dans celle-ci.

La figure 10 illustre un autre exemple d'application selon lequel une carte à puce ou étiquette électronique 101 est rechargée au moyen d'un équipement mobile de type téléphone portable 102 ou assistant personnel. Dans ce cas et à la différence du terminal exposé précédemment, ce qui sert de terminal est ici un autre élément mobile mais disposant d'une batterie ou source d'énergie suffisamment importante pour recharger le transpondeur 101.

Il est désormais possible de recharger un transpondeur de façon la plus rapide possible en optimisant son couplage avec le terminal ou chargeur.

Il n'est pas nécessaire qu'une transmission de données soit établie entre le transpondeur et le terminal, l'objectif étant ici uniquement de le charger. Par contre, une telle communication n'est pas exclue et peut être simultanée avec la recharge.

Il n'est par ailleurs pas nécessaire que le terminal soit dédié à un transpondeur. En effet, les différents calculs, mesures à vide, mesures avec différentes valeurs de résistance permettent d'adapter l'impédance du circuit oscillant du terminal et notamment sa résistance série pour optimiser la recharge d'un transpondeur quelconque dans une large plage de valeurs.

Dans sa réalisation préférée, la mise en oeuvre de l'invention se traduit en particulier par la mémorisation, dans le terminal, d'une valeur d'une information représentative du courant dans son circuit oscillant à vide (sans transpondeur à portée) et d'une valeur de cette information dans une position de référence du transpondeur (typiquement posé sur le terminal).

Différents modes de réalisation ont été décrits. Différentes variantes peuvent être envisagées. En particulier, bien que quelques exemples d'application ont été illustrés, l'invention s'applique quel que soit le type de transpondeur actif que l'on souhaite charger. En outre, la mise en oeuvre pratique des modes de réalisation décrits est à la portée de l'homme du métier à partir des indications fonctionnelles données ci-dessus et en utilisant les outils généralement disponibles dans le terminal (logique programmable, détecteurs, microprocesseur, etc.).

## Revendications

1. Procédé de configuration d'un terminal (1) apte à émettre un champ radiofréquence à destination d'un transpondeur (2), comportant, en présence d'un transpondeur à portée du terminal, les étapes suivantes :

   mesurer une information représentative du courant ($I_{max0}$) dans le circuit oscillant du terminal avec une première valeur ($R1_0$) de résistance série (R1) de ce circuit oscillant ;
   comparer cette information à une valeur à vide ($I_{vide}$) représentative du courant dans le circuit oscillant du terminal alors qu'aucun transpondeur n'est dans son champ ; et
   modifier la résistance série vers une deuxième valeur ($R1_1$) choisie en fonction de la première valeur, de l'information mesurée et de ladite valeur à vide.

2. Procédé selon la revendication 1, dans lequel la valeur de la résistance série (R1) est choisie pour que le rapport entre l'information mesurée et ladite valeur à vide soit approximativement égal à 2.

3. Procédé selon la revendication 1 ou 2, dans lequel un cycle de charge d'une batterie (24) que comporte le transpondeur est déclenché une fois la valeur de la résistance série (R1) fixée.

4. Terminal (1) de génération d'un champ à destination d'un transpondeur, **caractérisé en ce qu'**il comporte un circuit (31) de résistances commutables dont la valeur est choisie conformément à l'une quelconque des revendications 1 à 3.

5. Appareil portatif comportant un terminal conforme à la revendication 4.

6. Système de communication comportant :

   un terminal selon la revendication 4 ; et
   un transpondeur actif adapté à communiquer avec ce terminal et comportant des moyens pour lui transmettre une information sur le niveau de charge de sa batterie (24).

## Claims

1. A method for configuring a terminal (1) capable of emitting a radio-frequency field for a transponder (2), comprising, in the presence of a transponder within the range of the terminal, comprising the steps of:

   measuring information representative of the current ($I_{max0}$) in the oscillating circuit of the terminal with a first value ($R1_0$) of series resistance (R1) of this oscillating circuit;

comparing this information with an off-load value ($I_{vide}$) representative of the current in the oscillating circuit of the terminal while no transponder is in its field; and

modifying the series resistance towards a second value ($R1_1$) selected according to the first value, to the measured information, and to said off-load value.

2. The method of claim 1, wherein the value of the series resistance (R1) is selected so that the ratio between the measured information and said off-load value is approximately equal to 2.

3. The method of claim 1 or 2, wherein a charge cycle of a battery (24) comprised in the transponder is triggered once the value of the series resistance (R1) has been set.

4. A terminal (1) for generating a field for a transponder, **characterized in that** it comprises a circuit (31) of switchable resistors having their value selected according to any of claims 1 to 3.

5. A portable device comprising the terminal of claim 4.

6. A communication system comprising:

the terminal of claim 4; and
an active transponder adapted to communicate with said terminal and comprising means for transmitting thereto information about the charge level of its battery (24).

**Patentansprüche**

1. Verfahren zum Konfigurieren eines Anschlusses (1), der ein Radio-Frequenz-Feld an einen Transponder (2) senden kann, mit den folgenden Verfahrensschritten bei Anwesenheit eines Transponders innerhalb der Reichweite des Anschlusses:

Messen einer Information, die repräsentativ ist für den Strom ($I_{max0}$) in dem Oszillatorschaltkreis des Anschlusses mit einem ersten Wert ($R1_0$) eines Serienwiderstandes (R1) des Oszillatorschaltkreises;
Vergleichen dieser Information mit einem Leerlaufwert ($I_{vide}$), der repräsentativ ist für den Strom in dem Oszillatorschaltkreis des Anschlusses, wenn sich kein Transponder in seiner Reichweite befindet; und
Modifizieren des Serienwiderstandes in Richtung eines zweiten Wertes ($R1_1$), der als Funktion des ersten Wertes, der gemessenen Information und des Leerlaufwertes gewählt wird.

2. Verfahren nach Anspruch 1, wobei der Wert des Serienwiderstandes (R1) so gewählt wird, dass das Verhältnis zwischen der gemessenen Information und dem Leerlaufwert ungefähr 2 ist.

3. Verfahren nach Anspruch 1 oder 2, wobei ein Ladezyklus einer Batterie (24), die der Transponder aufweist, ausgelöst wird, so bald der Wert des Serienwiderstandes (R1) festgelegt ist.

4. Anschluss (1) zum Erzeugen eines Feldes für einen Transponder, **dadurch gekennzeichnet, dass** er einen Schaltkreis (31) aus schaltbaren Widerständen aufweist, deren Wert nach Maßgabe einer der Ansprüche 1 bis 3 gewählt ist.

5. Tragbare Vorrichtung mit einem Anschluss gemäß Anspruch 4.

6. Kommunikationssystem mit:

einem Anschluss gemäß Anspruch 4; und
einem aktiven Transponder, der dazu eingerichtet ist, mit diesem Anschluss zu kommunizieren, und Mittel zum Übertragen von Informationen über den Ladepegel seiner Batterie (24) zu diesem aufweist.

Fig 1

Fig 2

Fig 3

Fig 4

Fig 5

Fig 7

Fig 6A

Fig 6B

Fig 6C

Fig 8

L2

100

21'

**Fig 9**

102

101

**Fig 10**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0999517 A
- US 6462647 B
- US 6944424 B

- EP 1154367 A
- EP 0857981 A